# EUROPÄISCHE PATENTSCHRIFT

(11) **EP 4 482 637 B1**
(45) Veröffentlichungstag und Bekanntmachung des Hinweises auf die Patenterteilung: **17.12.2025**
(21) Anmeldenummer: 23706742.6
(22) Anmeldetag: 21.02.2023
(51) Int. Cl.: B22F 10/28, B22F 10/31, B22F 12/45, B33Y 10/00, B33Y 30/00, B33Y 40/10, B29C 64/153, B33Y 50/02

(54) **VORRICHTUNG, SYSTEM UND VERFAHREN ZUM KALIBRIEREN EINER LASEREINRICHTUNG**
DEVICE, SYSTEM AND METHOD FOR CALIBRATION OF A LASER DEVICE
DISPOSITIF, SYSTEME ET PROCEDE DE CALIBRATION D'UN DISPOSITIF LASER

(30) Priorität: 22.02.2022 DE 102022104184
(43) Veröffentlichungstag der Anmeldung: 01.01.2025
(73) Patentinhaber: Kurtz GmbH & Co. KG, 97892 Kreuzwertheim (DE)
(72) Erfinder: ROMANOV, Victor, 97877 Wertheim (DE)
(74) Vertreter: DREISS Patentanwälte PartG mbB
(86) Internationale Anmeldenummer: PCT/EP2023/054300
(87) Internationale Veröffentlichungsnummer: WO 2023/161223

(56) Entgegenhaltungen:
- DE-A1- 102011 006 553
- US-A1- 2021 308 771
- US-A1- 2021 379 665

## Beschreibung

Die vorliegende Erfindung betrifft eine Vorrichtung, ein System und ein Verfahren zum Kalibrieren einer Lasereinrichtung, die ausgebildet ist, um eine Arbeitslaserstrahl in einem vorbestimmten Arbeitsbereich frei zu positionieren.

Mittels 3D-Drucken ist es möglich, verschiedenste dreidimensionale Bauteile mit komplexer Geometrie herzustellen. Dabei werden dreidimensionale Werkstücke schichtweise aufgebaut. Der Aufbau erfolgt computergesteuert aus einem oder mehreren flüssigen oder festen Werkstoffen nach vorgegebenen Maßen und Formen (CAD). Beim Aufbau finden physikalische oder chemische Härtungs- oder Schmelzprozesse statt. Typische Werkstoffe für das 3D-Drucken sind Kunststoffe, Kunstharze, Keramiken und Metalle.

Der 3D-Druck ist ein generatives beziehungsweise additives Fertigungsverfahren. Die wichtigsten Techniken des 3D-Druckens sind das selektive Laserschmelzen (SLM) und das Elektronenstrahlschmelzen (EBM) für Metalle und das selektive Lasersintern (SLS) für Polymere, Keramik und Metalle.

Ein weiteres generatives Verfahren ist das punktuelle Aufschmelzen und Erstarren. Bei dieser Art von Verfahren wird Metallpulver oder Metalldraht schichtweise aufgeschmolzen und erstarrt, sodass ein dreidimensionales Bauteil generiert werden kann. Durch die lokal begrenzte Energieeinbringung mittels Laserstrahl ist die Größe des ausgebildeten Schmelzbades gering. Somit besteht die Möglichkeit, filigrane Strukturen zu erzeugen. Entsprechende Verfahren werden als Laser Engineered Net Shaping (LENS), als Direct Metal Deposition (DMD), als Laser Additive Manufacturing (LAM), als Selective Laser Melting (SLM) oder als Laser Metal Deposition (LMD) kommerziell vertrieben.

Beim selektiven Laser-Sintern (SLS/LMF) wird auf einer Arbeitsfläche (Bauplattform) eine Schicht Pulverwerkstoff aufgetragen. Das lose Pulver wird durch einen Laserstrahl punktuell aufgeschmolzen. Dabei werden die Pulverpartikel je nach verwendetem Werkstoff in der Schicht und mit der darunter liegenden Schicht verbunden. Für die Herstellung metallischer Bauteile können zwei grundsätzliche Entwicklungsrichtungen differenziert werden. Neben der direkten Verfestigung metallischer Pulverwerkstoffe durch Laserstrahlung (direktes Metall-Laser-Sintern) hat sich bereits frühzeitig die Herstellung metallischer Bauteile über eine Kombination aus SLS von Kunststoff ummanteltem Metallpulver mit nachträglicher thermischer Behandlung (IMLS) etabliert.

Beim direkten Metall-Laser-Sintern (DMLS) werden entweder ein- oder mehrkomponentige Metallwerkstoffe verwendet. Insbesondere werden dabei DMLS-Mehrkomponentenpulver verwendet, die aus verschiedenen Legierungselementen bestehen. Die im Pulver enthaltene niedrig schmelzende Komponente wird durch einen Laserstrahl aufgeschmolzen und umfließt die hochschmelzende Komponente, die als Strukturgeber dient.

Beim Electron Beam Melting (EBM) entspricht der Prozessablauf im Wesentlichen dem der Laserbasierten Verfahren. Dabei wird loses Metallpulver, im Pulverbett oder über eine Düse, oder ein Draht punktuell aufgeschmolzen, und erstarrt anschließend in der gewünschten Kontur. Die dafür erforderliche Energie wird durch einen Elektronenstrahl eingebracht. Das Verfahren erfolgt meistens in einer Inertgas gefluteten Unterdruck-Kammer.

Beim Electron Beam-Melting bzw. Elektronenstrahlschmelzen wird, ähnlich wie beim Selective Laser-Melting (SLM) eine hohe Energie eingebracht, die zum Schmelzen des Baumaterials führt. Die Energiezuführung geschieht nicht über einen Hochleistungslaser, sondern über einen starken Elektronenstrahl, der mittels starken Magnetspulen passend abgelenkt und damit positioniert wird. Der Prozess des Electron Beam-Meltings muss unter Hochvakuum ablaufen. Dies begrenzt deutlich den Bauraum der Geräte, die mit dem Selektiven Elektronenstrahlschmelzen arbeiten.

In den letzten Jahren wurden Verfahren entwickelt, um die Verarbeitung einkomponentiger Metallwerkstoffe zu verbessern. Entsprechende Verfahren werden beispielsweise unter der Bezeichnung Selective Laser Melting (SLM) kommerziell vertrieben.

Im Gegensatz zum Selective Laser-Sintering (SLS) wird beim Selective Laser-Melting (SLM) bzw. Selektivem Laserschmelzen über einen Laserstrahl deutlich mehr Energie in das Pulverbett eingebracht, so dass an den betroffenen Stellen eine echte Materialschmelze entsteht. Damit entsteht im Vergleich zum SLS-Verfahren ein homogeneres Objekt mit höherer Dichtheit.

Laserauftragschweißen gehört zum Auftragschweißen (Cladding), bei dem auf ein Werkstück ein Oberflächenauftrag mittels Aufschmelzen und gleichzeitigem Aufbringen eines nahezu beliebigen Materials erfolgt. Dies kann in Pulverform z. B. als Metallpulver oder auch mit einem Schweißdraht bzw. -band geschehen. Beim Laserauftragschweißen dient als Wärmequelle ein Laser hoher Leistung, vornehmlich Diodenlaser oder Faserlaser, früher auch CO2- und Nd:YAG-Laser.

Beim Laserauftragschweißen mit Pulver erhitzt der Laser das Werkstück meist defokussiert und schmilzt es lokal auf. Gleichzeitig wird ein inertes Gas gemischt mit feinem Metallpulver zugeführt. An der erhitzten Stelle schmilzt das Metallpulver auf und verbindet sich mit dem Metall des Werkstücks. Neben Metallpulver können auch keramische Pulverwerkstoffe, speziell Hartstoffe, verwendet werden. Das Laserauftragschweißen mit Draht bzw. Band funktioniert analog zum Verfahren mit Pulver, jedoch mit Draht bzw. Band als Zusatzwerkstoff.

Demgemäß werden bei additiven Fertigungsverfahren ein Pulverbett, eine Pulverzuführung oder eine Drahtzuführung verwendet, wobei diese Ausgangsmaterialien dann mittels Laserstrahl, Elektronenstrahl, Plasma-/Lichtbogen aufgeschmolzen und anschließend verfestigt werden. Weiterhin werden bei den generativen Fertigungsverfahren Inert- oder Aktivgase als Prozessgase verwendet.

Ein Ziel bei den vorstehend genannten generativen Fertigungsverfahren ist es, eine möglichst effiziente Energieeinbringung zu gewährleisten, so dass ein sicherer Herstellungsprozess und eine hohe Güte des Bauteiles erzielt werden.

Bei diesen Verfahren wird versucht, kritische Einflüsse und Vorgänge bei der Energieeinbringung durch geeignete Maßnahmen zu mindern. In diesem Zusammenhang ist die Verwendung einer Substratplatte, auf der das Bauteil fixiert wird, die Prozessführung unter Schutzgasatmosphäre oder die Anwendung neuer Scan-Strategien zur Belichtung des Pulvers mittels Laserenergie bekannt.

Aus der DE 10 2011 006 553 A1 geht ein Verfahren zum Ermitteln einer Fokuslage oder eines Strahlprofils eines Lichtstrahls mittels einer Lochblende und einem nachgeordneten Detektor hervor. Anstelle einer einzelnen Lochblende kann auch eine Lochplatte mit mehreren, jeweils Messpunkte definierenden Löchern verwendet werden.

Aus der DE 10 2009 016 585 A1 geht ein Verfahren und eine Vorrichtung zum Kalibrieren einer Bestrahlungsvorrichtung, insbesondere einer Vorrichtung zum generativen Fertigen von Bauteilen hervor, bei welcher eine Bildwandlerplatte vorgesehen ist, die lokal mit energiehaltiger Strahlung bestrahlt wird. Die Bildwandlerplatte wandelt die Strahlungsenergie in detektierbares Licht um, das von einem Detektor detektiert wird.

In der DE 10 2020 122 670 A1 ist eine weitere Vorrichtung zum Kalibrieren einer Bestrahlungsvorrichtung, insbesondere einer 3D-Druckvorrichtung beschrieben, bei welcher außerhalb des Arbeitsbereiches Detektionselemente vorgesehen sind, um die Position eines Lichtstrahls zu kalibrieren. Die Detektionselemente können Öffnungen aufweisen, hinter welchen optische Sensoren zum Detektieren der Lichtstrahlen angeordnet sind. In der DE 10 2020 100 217 A1 ist ein Verfahren zur automatisierten Strahlpositionierung eines Laserstrahls bezüglich einer Düse eines Laserbearbeitungskopfes beschrieben.

Die Druckschriften US 2021/379665 A1 und US 2021/308771 A1 gehören auch zum Stand der Technik.

Aufgabe der vorliegenden Erfindung ist es, eine Vorrichtung sowie ein Verfahren zum Kalibrieren einer Lasereinrichtung vorzusehen, die ausgebildet sind, um einen Arbeitslaserstrahl in einem vorbestimmten Arbeitsbereich frei zu positionieren, bereitzustellen, um einen Arbeitslaserstrahl mit einer vorbestimmten Genauigkeit in einem Arbeitsbereich anzuordnen.

Eine weitere Aufgabe der vorliegende Erfindung besteht darin, eine Vorrichtung und ein Verfahren zum Kalibieren einer Lasereinrichtung vorzusehen, welche eine hohe Reproduzierbarkeit ermöglichen. Zudem besteht eine Aufgabe der vorliegenden Erfindung darin, eine verbesserte Vorrichtung sowie ein verbessertes Verfahren zur additiven Fertigung bereitzustellen, um Bauteile einfacher schneller und/oder mit höherer Qualität bereitzustellen.

Eine weitere Aufgabe der vorliegenden Erfindung besteht darin, ein alternatives Verfahren zur additiven Fertigung bereitzustellen.

Eine oder mehrere dieser Aufgaben werden durch Merkmale der unabhängigen Patentansprüche gelöst. Vorteilhafte Ausgestaltungen sind in den davon abhängigen Unteransprüchen angegeben. Erfindungsgemäß ist eine Vorrichtung zum Kalibieren einer Lasereinrichtung vorgesehen, die ausgebildet ist, um einen Arbeitslaserstrahl in einem vorbestimmten Arbeitsbereich frei zu positionieren. Diese umfasst eine Sensorplatte mit einem oder mehreren Sensorfeldern zum Anordnen in einem Arbeitsbereich,
eine Lochplattenlehre mit mehreren Kalibierdurchgangsöffnungen, wobei die mehreren Kalibierdurchgangsöffnungen jeweils im Bereich jeweils einer der mehreren Sensorfelder angeordnet sind,
eine Steuereinrichtung zum Bestimmen der relativen Position der Sensorfelder zueinander nach dem Belichten derselben durch die Kalibrierdurchgangsöffnungen der Lochplattenlehre hindurch,
eine Pilot-Lasereinrichtung zum Bereitstellen eines Pilotlaserstrahls entlang des Strahlenganges des Arbeitslaserstrahls, um eine Lasereinrichtung durch Abtasten des Pilotlaserstrahls mittels der Sensorfelder zu kalibrieren.

Beim Kalibrieren der Lasereinrichtung mittels der Sensorfelder, deren relative Position zueinander bestimmt ist, kann die Lochplattenlehre auf der Sensorplatte angeordnet oder von dieser entfernt sein. Da die relative Position der Sensorfelder bestimmt ist, kann mittels der Sensorfelder die relative Position des auf eines der Sensorfelder gerichteten Pilotlaserstrahls zu anderen Positionen des Pilotlaserstrahls, bei welchen er auf dasselbe oder ein anderes Sensorfeld gerichtet ist, bestimmt werden.

Bei der Lasereinrichtung handelt es sich vorzugsweise um eine Lasereinrichtung einer Vorrichtung zum additiven Fertigen von Bauteilen. Alternativ können im Rahmen der vorliegenden Erfindung jedoch auch andere Lasereinrichtungen, beispielsweise zum Laserschneiden, Laserbohren oder dergleichen mit der erfindungsgemäßen Vorrichtung kalibriert werden. Diese Vorrichtungen haben gemeinsam, dass ein Arbeitslaserstrahl der Lasereinrichtung entlang eines Arbeitsbereichs verfahrbar ist, um dort einen vorbestimmten Arbeitsprozess auszuführen. Bei dem Arbeitsbereich handelt es sich vorzugweise um eine Bauplattform einer Vorrichtung zum additiven Fertigen.

Unter einer Lasereinrichtung wird im Rahmen der vorliegenden Erfindung vorzugsweise ein Bearbeitungskopf verstanden, der mit einem Laser bzw. einer Einrichtung zum Bereitstellen eines Laserstrahls verbunden ist, um einen Laserstrahl auszusenden oder der einen eigenen Laser bzw. einer Einrichtung zum Bereitstellen eines Laserstrahls aufweist, um einen Laserstrahl auszusenden. Unter einem Laserstrahl wird im Rahmen der vorliegenden Erfindung, sofern nichts anderes beschrieben ist, ein Laserstrahlabschnitt verstanden, der von einem Bearbeitungskopf in Richtung Bearbeitungsbereich abgegeben wird.

Der vorliegenden Erfindung liegt die Erkenntnis zugrunde, dass bei Lasereinrichtungen mit mehreren Bearbeitungsköpfen, welche jeweils einen Laserstrahl abgebenden, die relative Positionierung der Arbeitsköpfe zueinander sehr exakt eingestellt werden muss, wohingegen die absolute Positionierung aller Arbeitsköpfe im Arbeitsbereich nicht so wichtig ist. Bei einer Vorrichtung zum additiven Fertigen von Bauteilen ist es für das Bauteil ohne Relevanz, ob es an einer vorbestimmten Position im Arbeitsbereich oder diesbezüglich etwas versetzt gefertigt wird. Jedoch ist es äußerst wichtig, dass die einzelnen Abschnitte des Bauteils exakt zueinander positioniert sind. Daher ist es möglich, eine Lasereinrichtung mittels einer Sensorplatte und einer Lochplattenlehre zu kalibrieren, welche unabhängig von der Lasereinrichtung ausgebildet sind. Beim Kalibriervorgang wird zunächst sowohl die Sensorplatte als auch die Lochplattenlehre in die Lasereinrichtung eingesetzt, um zunächst die Sensorplatte einer Vorkalibrierung zu unterziehen, so dass die relative Position der Sensorfelder zueinander bekannt ist. Die Lochplattenlehre kann danach entfernt werden. Die Sensorplatte sollte während des Kalibriervorganges seine Position in der Lasereinrichtung exakt beibehalten, wobei es jedoch von untergeordneter Bedeutung ist, wie die Sensorplatte grundsätzlich gegenüber der Lasereinrichtung positioniert ist. Es ist lediglich wichtig, dass sie während des Kalibriervorganges ihre Position beibehält, sodass die einzelnen Arbeitsköpfe exakt relativ zueinander kalibriert werden können.

Die Kombination der Verwendung einer Sensorplatte mit mehreren Sensorfeldern und einer Lochplattenlehre bildet auf einfache Art und Weise eine sehr präzise Kalibriereinrichtung. Eine Sensorplatte mit mehreren Sensorfeldern ist in der Regel eine gedruckte Leiterplatte, auf welcher mehrere Flächenkameras angeordnet sind, die jeweils ein Sensorfeld bilden. Eine solche Leiterplatte kann sich materialbedingt etwas verziehen. Die Verzüge sind vor allem temperaturabhängig. Daher ist die relative Positionierung der Sensorfelder nicht immer sehr exakt. Durch Auflegen bzw. Aufsetzen der Lochplattenlehre mit mehreren Kalibrierdurchgängen, die jeweils im Bereich einer der Sensorfelder angeordnet sind, werden zunächst nur Bereiche der Sensorfelder zum Kalibrieren der Lasereinrichtung genutzt, die aufgrund der exakten Ausrichtung der Kalibrierdurchgänge der Lochplattenlehre in einer exakten örtlichen Beziehung zueinander ausgerichtet sind. Mittels der Lochplattenlehre sind somit zunächst nur Bereiche der Sensorfelder zugänglich, die in einer exakten örtlichen Beziehung zueinanderstehen, so dass anhand dieser durch die Lochplattenlehre bekannten örtlichen Beziehung die relativen Positionen der Sensorfelder bestimmt werden können.

Da mit der Vorkalibrierung zunächst die Position der Sensorfelder zueinander bestimmt wird, kann im Gegensatz zu den oben erläuterten Verfahren und Vorrichtungen aus dem Stand der Technik die Kalibrierung der Laserstrahlen mit der Auflösung erfolgen, welche durch die Sensorfelder bereitgestellt wird, und ist nicht an den Durchmesser der Kalibrierdurchgangsöffnungen gebunden. Da die Sensorfelder Bildpunkte aufweisen, die in der Regel wesentlich kleiner als die Kalibrierdurchgangsöffnungen sind, kann eine durch die Größe der Bildpunkte der Sensorfelder definierte Auflösung erreicht werden. Mit dieser Vorrichtung kann somit sowohl der Ort des jeweiligen Pilotlaserstrahls als auch die Fläche, mit welcher dieser auf dem jeweiligen Sensorfeld auftrifft, exakt vermessen werden. Mit letzterem kann die Fokussierung des Pilotlaserstrahls optimiert werden.

Werden die Arbeitsköpfe der Lasereinrichtung somit anhand der durch die Lochplattenlehre vorgegebenen Bereiche der Sensorfelder kalibriert, so können sie in eine exakte örtlichen Beziehung zueinander gesetzt werden. Mit anderen Worten bedeutet dies, dass die Kombination aus Sensorplatte und Lochplattenlehre ein gemeinsames einheitliches Koordinatensystem bildet, auf das alle Arbeitsköpfe kalibriert werden. Dieses durch die Sensorplatte und die Lochplattenlehre vorgegebenen Koordinatensystem kann deshalb als gemeinsames Hauptkoordinatensystem bezeichnet werden.

Insbesondere kann vorgesehen sein, dass der Durchmesser des Pilotlaserstrahls kleiner als die entsprechenden Kalibierdurchgangsöffnungen ist. Da der örtliche Bezug der Sensorfelder bekannt ist, ist es möglich mit einer höheren Auflösung die Positionen des Pilotlaserstrahls festzustellen, als dies durch den Durchmesser der Kalibrierdurchgangsöffnungen vorgegeben ist. Die Auflösung ist dann alleine durch die Größe der Bildpunkte (Englisch: Pixel) der Sensorfelder begrenzt, welche bei herkömmlichen Kamerachips, wie z.B. CMOS- oder CCD-Sensoren, wesentlich kleiner als die Größe der Kalibrierdurchgangsöffnungen ist. So ist eine typische Größe der Bildpunkte der Sensorfelder nicht größer als 2 µm x 2 µm und vorzugsweise nicht größer als 1,5 µm x 1,5 µm. Der Durchmesser der Kalibrierdurchgangsöffnungen beträgt vorzugsweise zumindest 2 mm, insbesondere zumindest 3 mm bzw. zumindest 5 mm. Der Bereich einer Kalibrierdurchgangsöffnung umfasst somit eine Vielzahl von Bildpunkten eines Sensorfeldes.

Die Sensorplatte ist derart ausgebildet, dass sie dem selben Verzug aufgrund des thermischen Einflusses des Arbeitslaserstrahls unterliegt wie eine Bauplattform und/oder ein auf der Bauplattform erzeugtes Bauteil.

Die Lochplatte kann aus einem äußerst stabilen Material bzw. einem Material mit einer hohen mechanischen Festigkeit ausgebildet sein, so dass die Löcher auch bei thermischer Beanspruchung ihre Position nicht verändern und in einem exakten Bezug zueinander angeordnet sind, um eine hohe Genauigkeit zu erzielen. Die Kalibierdurchgangsöffnungen werden auf den Sensorfeldern der Sensorplatte abgebildet.

Erfindungsgemäß ist somit vorgesehen, dass ein Pilotlaserstrahl zum Kalibrieren eines Arbeitslaserstrahl verwendet wird. Die Sensorplatte wird dabei auf einem Arbeitsbereich einer Lasereinrichtung, insbesondere einer Bauplattform einer Vorrichtung zum additiven Fertigen, angeordnet. Auf dieser Sensorplatte wird dann die Lochplattenlehre angeordnet. Anschließend erfolgt eine Belichtung der Sensorfelder der Sensorplatte über die Kalibierdurchgangsöffnung der Lochplattenlehre, um die relative Position der Sensorfelder zueinander zu bestimmen. Daraufhin wird ein Pilotlaserstrahl auf Basis von Steuerinformationen mittels einer Lasereinrichtung durch die Kalibrierdurchgangsöffnung der Lochplattenlehre auf den Sensorfeldern positioniert. Somit wird der Pilotlaserstrahl durch mehrere Kalibierdurchgangsöffnungen auf die Sensorfelder gerichtet, wobei die Steuerinformationen Soll-Werte bilden. Nun werden mehrere Ist-Werte von Ortsinformationen des Pilotlaserstrahls mittels der Sensorfelder detektiert. Danach werden diese Ist-Werte mit entsprechenden Soll-Werten von Ortsinformationen für unterschiedliche Orte bzw. Positionen des Pilotlaserstrahls verglichen und die jeweiligen Abweichungen bestimmt.

Um eine Lasereinrichtung anzusteuern, wird ein Arbeitslaserstrahl mittels Steuerinformationen in einem Arbeitsbereich positioniert, wobei erfindungsgemäß zum Bestimmen der Steuerinformationen die ermittelten Abweichungen als Korrekturwerte verwendet werden. Eine Korrekturfunktion kann anhand eines Vergleichs von Ist-Werten und Soll-Werten von Ortsinformationen eines Arbeitslaserstrahls erzeugt werden, um die ermittelten Werte über einen Arbeitsbereich zu interpolieren.

Weiterhin kann vorgesehen sein, dass alle Sensorfelder von der Lochplattenlehre abgedeckt sind, so dass im Bereich jedes Sensorfeldes eine Kalibierdurchgangsöffnung angeordnet ist.

Somit ist eine Blende bzw. eine einzige Lochplattenlehre für alle Sensorfelder der Sensorplatte bzw. einer Sensoreinrichtung vorgesehen.

Die Sensorfelder können in einem Randbereich der Sensorplatte angeordnet sein.

In einem Randbereich eines Arbeitsbereichs bzw. oder einer Bauplattform einer Vorrichtung zum additiven Fertigen treten bei der Benutzung die größten Verzüge aufgrund der durch die Lasereinrichtung eingebrachten thermischen Energie auf. Daher kann es ausreichend sein, lediglich die entsprechenden Positionen im Randbereich des Arbeitsbereichs zu ermitteln. Dadurch ist die Vorrichtung kostengünstig aufgebaut.

Entsprechende Sensoreinrichtungen der Sensorfelder können dabei vorzugsweise auf einige µ oder sogar ein µ genau eine Position detektieren.

Vorzugsweise können in etwa 10 bis 50 bzw. 15 bis 40 und insbesondere 20 bis 30 Sensorfelder auf der Sensorplatte angeordnet sein.

Zudem kann eine Lasereinrichtung zum Bereitstellen eines Arbeitslaserstrahls vorgesehen sein.

Bei der Lasereinrichtung kann es sich beispielsweise um einen Faserlaser handeln. Der Laser kann mit einer Leistung von zumindest 200 Watt bzw. von zumindest 300 Watt bis zu maximal 400 Watt bzw. bis zu maximal 600 Watt bzw. bis zu maximal 800 Watt bzw. bis zu maximal 1000 Watt bzw. bis zu maximal 1200 Watt Laserlicht abgeben.

Die Pilotlasereinrichtung kann Bestandteil der Lasereinrichtung sein oder als separate Pilotlasereinrichtung ausgebildet sein.

Als Lasereinrichtung kann beispielsweise ein Laser der Firma IPG Photonics verwendet werden, der unter der Teilenummer P21-010106, YLR-series SLED 3.0 erhältlich ist. Ein solcher Laserstrahl kann einen Arbeitslaserstrahl und eine Pilotlaserstrahl ausgeben.

Der Pilotlaserstrahl ist vorzugsweise als ein fokussierter Laserstrahl ausgebildet und kann eine Leistung von ca. 0,1 Watt aufweisen.

Der Pilotlaserstrahl kann beispielsweise dadurch ausgebildet werden, dass in einer Lasererzeugungseinrichtung einer Lasereinrichtung weniger Licht eingekoppelt wird und/oder, dass ein Strahlteiler, ein Polarisationsfilter, ein Beamblock, ein Umlenkspielgel verwendet wird oder dass ein Laser mit einer regelbaren Pumpstufe vorgesehen ist, dessen Pumpstufe ausgeschaltet werden kann.

Daher können sowohl der Arbeitslaserstrahl als auch der Pilotlaserstrahl die gleichen Fasern eines Faserlasers verwenden.

Weiterhin kann vorgesehen sein, dass die Lasereinrichtung mehrere Bearbeitungsköpfe aufweist, die mit eine gemeinsamen Laser verbunden sind, um jeweils einen Laserstrahl im Multiplexverfahren auszusenden. Alternativ kann die Lasereinrichtung auch mehrere Bearbeitungsköpfe aufweisen, die jeweils einen eigenen Laser (Singleplex) aufweisen. Diese beiden Arten von Ausgestaltungen der Lasereinrichtung mit mehreren Bearbeitungsköpfen zum Aussenden von Laserstrahlen werden im Rahmen der vorliegenden Erfindung als Multi-Lasereinrichtungen bezeichnet.

Bei einer solchen Multi-Lasereinrichtung sind die Laser der Bearbeitungsköpfe zunächst jeweils bzgl. eines eigenen Koordinatensystems in einer X/Y-Ebene referenziert, d.h., dass jedem Bearbeitungskopf ein separates Koordinatensystem zugeordnet ist. Somit weist jeder Laser eines Bearbeitungskopfes ein eigenes Koordinatensystem auf.

Durch Kalibrierung der Positionen bzw. des Ortes der Laser der Bearbeitungsköpfe mittels der erfindungsgemäßen Vorrichtung können alle Laser der Bearbeitungsköpfe bzgl. des gemeinsamen Hauptkoordinatensystems referenziert werden, sodass diese dann bzgl. des gemeinsamen Hauptkordinatensystems im Arbeitsbereich kalibriert sind.

Beim Kalibrieren fährt jeder Bearbeitungskopf mit seinem Laserstrahl zumindest einen und vorzugsweise mehrere Punkte innerhalb seines jeweiligen eigenen referenzierten Koordinatensystems an, die auf entsprechende Punkte eines durch die Kalibriervorrichtung festgelegten einheitlichen Hauptkoordinatensystems abgebildet werden, um die Multi-Lasereinrichtung bzw. die mehreren Laser der Multi-Lasereinrichtung auf dieses Hauptkoordinatensystem zu kalibrieren. Auf diese Weise lassen sich alle Laser der Bearbeitungsköpfe bzgl. des einheitlichen Hauptkoordinatensystems ausrichten.

Weiterhin können die Bearbeitungsköpfe derart ausgerichtet bzw. eingestellt, dass eine jede optische Achse eines jeweiligen Laserstrahls eines Bearbeitungskopfes senkrecht zum Arbeitsbereich der Bauplattform bzw. zur Bearbeitungsfläche verläuft. Durch die senkrecht stehenden Laserstrahlen kann die Kalibrierung ebenenunabhängig erfolgen, sodass ein Abstand eines Bearbeitungskopfes und somit des entsprechenden Laserstrahls variieren kann.

Alle optische Achsen der mehreren Laserstrahlen können senkrecht zu einer Oberfläche der Bauplattform ausgerichtet sein. Das bedeutet eine Position eines Laserstrahls auf einem entsprechenden Sensorfeld der Sensorplatte bzw. der Bauplattform ändert sich bei Veränderung des Abstands der Lasereinrichtung in vertikaler Richtung (Z-Koordinate) von der Sensorplatte.

Zudem kann eine Messeinrichtung mit entsprechenden Sensoren zum Messen eines Durchmessers eines Laserstrahls vorgesehen sein. Der Durchmesser des Laserstrahls kann bspw. zumindest 30 µm, insbesondere zumindest 50 µm bzw. zumindest 100 µm betragen. Der Durchmesser des Laserstrahls beträgt vorzugsweise nicht mehr als 2 mm, insbesondere nicht mehr als 1 mm bzw. nicht mehr als 500 µm.

Es kann nicht nur ein Laser eines Bearbeitungskopfes der Lasereinrichtung kalibriert werden, sondern die mehreren Laser einer Lasereinrichtung können relativ zueinander kalibriert und ausgerichtet werden.

Somit kann mit der vorliegenden Erfindung nicht nur eine Lasereinrichtung mit einem Laser in dem Bearbeitungsbereich kalibriert werden, sondern es können mehrere Laser von Bearbeitungsköpfen im jeweiligen Bearbeitungsbereich kalibriert werden, sodass auch die mehreren Laser der Bearbeitungsköpfe der Multi-Lasereinrichtung relativ zueinander im Bearbeitungsbereich kalibriert sind.

Die Sensoreinrichtung kann eine Leiterplatte und CMOS-Sensoren, so wie vorzugweise eine elektronische Netzwerkverbindung umfassen.

Die die Kalibierdurchgangsöffnung begrenzenden Kanten der Lochplattenlehre können derart scharfkantig und/oder sich konisch verjüngend ausgebildet sein, so dass die Lochplattenlehre zumindest im Bereich der Kalibierdurchgangsöffnung dünn ausgebildet ist.

Auf diese Weise können parallaxe Fehler vermieden werden.

Ein Durchmesser der Kalibierdurchgangsöffnung kann ca. 4 bis 5 mm kleiner sein als eine Fläche eines entsprechenden Sensorfeldes eines CMOS-Sensors.

Eine Fläche einer Kalibierdurchgangsöffnung kann kleiner als die Fläche eines entsprechenden Sensorfeldes der Sensoreinrichtung sein.

Insbesondere können die Kalibierdurchgangsöffnungen in einem Raster bzw. Array mit Abständen zwischen 50 mm und 500 mm angeordnet sein.

Dadurch dass die Flächen der Kalibierdurchgangsöffnung kleiner ist als die Fläche der entsprechenden Sensorfelder kann die Lochplattenlehre auf einfache Weise positioniert werden.

Die Sensorplatte und/oder die Lochplattenlehre können eine Zentriereinrichtung zum zentrierten Abordnen auf einem Arbeitsbereich aufweisen.

Bei dem Arbeitsbereich handelt es sich vorzugweise um eine Bauplattform einer Vorrichtung zum additiven Fertigen. Demgemäß kann vorgesehen sein, dass die Sensorplatte mittels einer ersten Zentriereinrichtung auf einer solchen Bauplattform zentriert und ausgerichtet angeordnet wird.

Im Anschluss daran kann die Lochplattenlehre mittels einer zweiten Zentriereinrichtung zentriert auf der Sensorplatte angeordnet werden.

Auf den Kalibierdurchgangsöffnungen kann jeweils in Richtung Lasereinrichtung weisenden Rohrblende angeordnet sein. Durch eine solche Rohrblende kann im Bereich der Sensorfelder gleichmäßiges diffuses Licht (Dunkelfeldlicht) erzeugt werden.

Weiterhin ist erfindungsgemäß ein System zum Kalibrieren einer Lasereinrichtung vorgesehen, das eine vorstehend aufgezeigte Vorrichtung zum Kalibrieren einer Lasereinrichtung sowie eine Vorrichtung zum additiven Fertigen mit mehreren Bearbeitungsköpfen zum Aussenden von Laserstrahlen umfasst.

Unter einer Vorrichtung zum additiven Fertigen wird im Rahmen der vorliegenden Erfindung eine Vorrichtung zum lagen- bzw. schichtweisen Aufbauen eines dreidimensionalen Bauteils unter Verwendung eines Pulverbettes, einer Pulverzuführung oder auch einer Drahtzuführung verstanden, welche als Ausgangsmaterial dienen, und mittels eines Laserstrahls oder auch eines Elektronenstrahls oder auch mittels Plasma bzw. Lichtbogen aufgeschmolzen werden. Demgemäß sind die in der Beschreibungseinleitung genannten generativen Fertigungsverfahren (3D-Drucken: Aufschmelzen und Erstarren (Laser Engineered Net Shaping (LENS), als Direct Metal Deposition (DMD) oder als Laser Additive Manufacturing (LAM)), lokalem Sintern oder Schmelzen, (Laser-Sintern (SLS)) Metall-Laser-Sintern (DMLS), Metall-Laser-Sintern (IMLS), Electron Beam Melting (EBM), Pulverbett basierten Laserstrahlschmelzen Laser Powder Bed Fusion (LPBF) oder Laser Auftrag-schweißen) für eine Vorrichtung zum additiven Fertigen vorgesehen.

Weiterhin ist erfindungsgemäß ein Verfahren zum Kalibieren einer Lasereinrichtung, die ausgebildet ist, um ein Arbeitslaserstrahl in einem vorbestimmten Arbeitsbereich frei zu positionieren, vorgesehen. Dieses Verfahren kann eine vorstehend aufgezeigte Vorrichtung zum Kalibrieren einer Lasereinrichtung verwenden und umfasst die folgenden Schritte
Anordnen einer Sensorplatte auf dem Arbeitsbereich, wobei die Sensorplatte mehrere Sensorfelder aufweist,
Anordnen einer Lochplattenlehre auf der Sensorplatte, wobei die Lochplattenlehre mehrere Kalibierdurchgangsöffnungen aufweist, die in einer vorbestimmte Anordnung zueinander und jeweils im Bereich eines Sensorfeldes angeordnet sind,
Belichten von Sensorfeldern der Sensorplatte über die Kalibierdurchgangsöffnung der Lochplattenlehre, um die relative Position der Sensorfelder zueinander zu bestimmen,
Positionieren eines Pilotlaserstrahls auf Basis von Steuerinformationen mittels einer Lasereinrichtung auf die Sensorfelder, so dass der Pilotlaserstrahl auf mehrere Sensorfelder gerichtet wird, wobei die Steuerinformationen zum Positionieren des Pilotlaserstrahls Soll-Werte bilden,
Detektieren von mehreren Ist-Werten von Ortsinformationen des Pilotlaserstrahls mittels der Sensorfelder,
Vergleichen dieser Ist-Werte mit entsprechendem Soll-Werten von Ortsinformationen von unterschiedlichen Orten bzw. Positionen des Pilotlaserstrahls und
Bestimmen der jeweiligen Abweichung.

Die Vorteile des erfindungsgemäßen Verfahrens entsprechen analog den vorstehend anhand der Vorrichtung zum Kalibieren einer Lasereinrichtung beschriebenen Vorteilen. Beim Kalibrieren der Lasereinrichtung kann die Lochplattenlehre auf der Sensorplatte angeordnet sein. Dann sind die Sensorfelder nur im Bereich der Kalibrierdurchgangsöffnungen frei zugänglich und zum Kalibrieren der Lasereinrichtung verwendbar. Vorzugsweise wird jedoch zum Kalibrieren der Lasereinrichtung die Lochplattenlehre abgenommen, so dass die gesamten Sensorfelder zum Kalibrieren der Lasereinrichtung zur Verfügung stehen.

Das Belichten der Sensorfelder bei aufgelegter Lochplattenlehre kann mittels des Pilotlaserstrahls oder einer sonstigen Lichtquelle erfolgen. Geeignete Lichtquellen sind insbesondere Lichtquellen, welche diffuses Licht abgeben, wie Dunkelfeldlichtquellen.

Insbesondere kann vorgesehen sein, dass das Verfahren für mehrere Laser von Bearbeitungsköpfen einer Multi-Lasereinrichtung ausgebildet ist, wobei die nachfolgenden Schritte ausgeführt werden: Positionieren eines Pilotlaserstrahls auf Basis von Steuerinformationen mittels einer Lasereinrichtung durch die Kalibierdurchgangsöffnung der Lochplattenlehre auf die Sensorfelder, so dass der Pilotlaserstrahl auf die Sensorfelder gerichtet wird, wobei die Steuerinformationen Soll-Werte bilden, Detektieren von mehreren Ist-Werten von Ortsinformationen des Pilotlaserstrahls mittels der Sensorfelder,
Vergleichen dieser Ist-Werte mit entsprechendem Soll-Werten von Ortsinformationen von unterschiedlichen Orten bzw. Positionen des Pilotlaserstrahls und
Bestimmen der jeweiligen Abweichung, für die einzelnen Laserstrahlen der Bearbeitungsköpfe, und Kalibrieren der mehreren Laserstrahlen der Bearbeitungsköpfe der Multi-Lasereinrichtung relativ zueinander im Bearbeitungsbereich.

Zudem ist erfindungsgemäß ein Verfahren zum Ansteuern eines Laserstrahls für ein vorstehend aufgezeigtes System vorgesehen, wobei ein Arbeitslaserstrahl mittels Steuerinformation in einem Arbeitsbereich positioniert wird. Das Verfahren zeichnet sich dadurch aus, dass zum Bestimmen der Steuerinformationen die vorstehend ermittelten Abweichungen als Korrekturwerte verwendet werden.

Dabei kann eine Korrekturfunktion anhand eines Vergleichs von Ist-Werten und Soll-Werten von Ortsinformationen eines Arbeitslaserstrahls erzeugt werden, um die ermittelten Korrekturwerte über einen Arbeitsbereich zu interpolieren.

Die vorliegende Erfindung wird im Folgenden anhand von in den Figuren dargestellten Ausführungsbeispiels näher beschrieben. Diese zeigen in:
Figur 1 eine schematische perspektivische Explosionsdarstellung einer erfindungsgemäßen Vorrichtung zum Kalibieren einer Lasereinrichtung,
Figur 2 eine schematische Seitenansicht einer Kalibrierdurchgangsöffnung einer Lochplattenlehre der Vorrichtung, und
Figur 3 eine schematische perspektivische Ansicht einer Rohrblende für eine Kalibrierdurchgangsöffnung einer Lochplattenlehre der Vorrichtung.

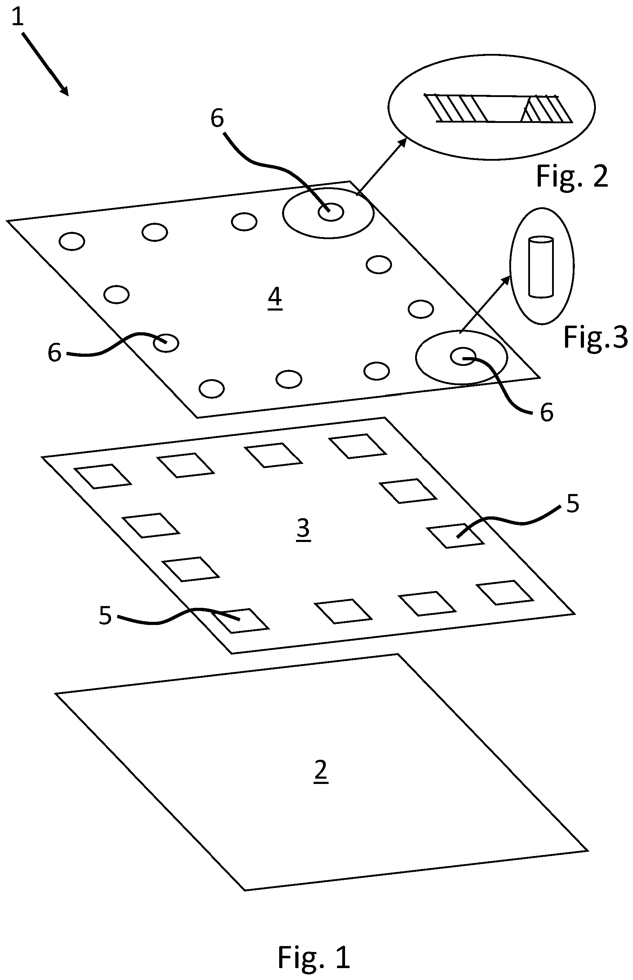

Im Folgenden wird eine erfindungsgemäße Vorrichtung 1 zum Kalibrieren einer Lasereinrichtung näher beschrieben (Figuren 1bis 3). Die Vorrichtung 1 ist ausgebildet, um einen Arbeitslaserstrahl in einem vorbestimmten Arbeitsbereich frei zu positionieren. Bei dem Arbeitsbereich handelt es sich vorzugsweise um eine Bauplattform 2 einer Vorrichtung zum additiven Fertigen (nicht dargestellt).

Die Vorrichtung 1 umfasst eine Sensorplatte 3 und eine Lochplattenlehre 4.

Weiterhin umfasst die Vorrichtung 1 eine Pilot-Lasereinrichtung (nicht dargestellt) zum Bereitstellen eines Pilotlaserstrahls entlang des Strahlengangs eines Arbeitslaserstrahls, um eine Lasereinrichtung zu kalibrieren. Vorzugsweise ist die Pilot-Lasereinrichtung integraler Bestandteil einer Lasereinrichtung einer Vorrichtung zum additiven Fertigen (nicht dargestellt) bzw. ist eine solche Lasereinrichtung ausgebildet, um eine Pilotlaserstrahl bereitzustellen. Alternativ kann die Pilotlasereinrichtung auch eine eigenständige Lasereinrichtung sein.

Die Sensorplatte 3 weist eine in etwa rechteckförmige Form auf. Im Bereich der Kanten der Sensorplatte 3 sind im vorliegenden Ausführungsbeispiel umlaufend zwölf Sensoreinrichtungen mit entsprechenden Sensorfeldern 5 angeordnet.

Die Sensorplatte 3 ist aus einem Material ausgebildet, das in etwa einen ähnlichen Verzug wie eine entsprechende Bauplattform einer Vorrichtung zum additiven Fertigen, wie ein entsprechend additiv gefertigtes Bauteil, aufweist.

Gemäß diesem Ausführungsbeispiel sind die Sensorfelder 5 in einem Randbereich der Sensorplatte angeordnet. Hierbei können auch eine andere geeignete Anzahl von Sensorfeldern 5 bzw. Sensoreinrichtungen verwendet werden. Es können beispielsweise zumindest vier bzw. sechs bzw. acht bzw. zehn bzw. zwölf bzw. 14 bzw. 16 bzw. 18 bzw. 20 bzw. 22 bzw. 24 bzw. 26 bzw. 28 bzw. 30 Sensorfelder und maximal 32 bzw. 34 bzw. 36 bzw. 38 bzw. 40 bzw. 42 bzw. 44 bzw. 46 bzw. 48 bzw. 50 Sensorfelder 5 vorgesehen sein. Alternativ können die einzelnen Sensorfelder 5 auch in einem Raster bzw. einem Array in etwa gleich beabstandet voneinander angeordnet sein.

Die Sensorplatte 3 ist aus einer Leiterplatte ausgebildet, wobei die Sensoreinrichtungen bzw. -felder 5 durch CMOS-Sensoren ausgebildet sind.

Weiterhin weist die Sensorplatte 3 eine Netzwerkverbindung (nicht dargestellt) zum Verbinden mit einem entsprechenden Datennetzwerk auf.

Die Sensorplatte 3 weist eine Zentriereinrichtung (nicht dargestellt), z. B. mittels Passstiften auf, um diese zentriert auf einem Arbeitsbereich bzw. einer Bauplattform 2 anzuordnen. Hierdurch ist die Sensorplatte während des Kalibriervorgangs auf der Lasereinrichtung fixiert.

Die Lochplattenlehre 4 weist ebenfalls eine in etwa rechteckförmige Form auf. Zudem sind in der Lochplattenlehre 4 Kalibrierdurchgangsöffnungen 6 ausgebildet, deren Anzahl der Anzahl der Sensorfelder 5 der Sensorplatte 3 entspricht. Die Kalibrierdurchgangsöffnungen 6 sind somit korrespondierend zu den Positionen der Sensorfelder 5 der Sensorplatte 3 in der Lochplattenlehre 4 angeordnet.

Die Lochplattenlehre 4 ist aus einem Material mit einer hohen Eigensteifigkeit bzw. einem sehr stabilen Material und somit einem Material mit einer hohen mechanischen Festigkeit ausgebildet, sodass die Lochplattenlehre 4 beim Einbringen von thermischer Energie keinerlei Verzug aufweist oder nahezu keinen Verzug aufweist. Dies ist sehr vorteilhaft, da die Kalibrierdurchgangsöffnungen 6 dann immer am gleichen Ort bzw. an der gleichen Position bezüglich der Bauplattform angeordnet sind.

Die entsprechenden Kalibrierdurchgangsöffnungen 6 der Lochplattenlehre 4 werden bei der Benutzung entsprechend auf den Sensorfeldern 5 der Sensorplatte 3 abgebildet.

Hierbei wird allen Sensorfeldern 5 jeweils zumindest eine Kalibrierdurchgangsöffnung 6 der Lochplattenlehre 4 zugeordnet, sodass im Bereich jedes Sensorfeldes 5 eine Kalibrierdurchgangsöffnung 6 angeordnet ist.

Die Kanten bzw. Ränder der Lochplattenlehre 4, die die Kalibrierdurchgangsöffnungen 6 begrenzen, sind derart scharfkantig bzw. dünn ausgebildet, dass parallaxe Fehler vermieden werden können.

Zusätzlich und/oder alternativ können die Kalibrierdurchgangsöffnungen 6 bzw. die die Kalibrierdurchgangsöffnungen 6 begrenzenden Kanten der Lochplattenlehre 4 in Richtung der Sensorfelder 5 sich konisch verjüngend ausgebildet sein, um ebenfalls parallaxe Fehler zu vermeiden (Figur 2).

Eine Fläche der Kalibrierdurchgangsöffnung 6 ist kleiner als eine Fläche eines entsprechenden Sensorfeldes 5 ausgebildet, um vom jeweiligen Sensorfeld 5 vollständig erfasst zu werden. Auf diese Weise lassen ich die Kalibrierdurchgangsöffnungen 6 leicht positionieren bzw. entsprechend den Sensorfeldern 5 der Sensorplatte 3 ausrichten.

Zusätzlich kann auf den Kalibrierdurchgangsöffnungen 6 jeweils eine in Richtung Lasereinrichtung weisende Rohrblende 7 angeordnet sein (Figur 3). Mittels der Rohrblende 7 kann im Bereich der Sensorfelder 5 gleichmäßiges diffuses Licht (Dunkelfeldlicht) erzeugt werden.

Eine erfindungsgemäßes System zum Kalibrieren einer Lasereinrichtung (nicht dargestellt) umfasst die vorstehend aufgezeigte Vorrichtung 1 zum Kalibrieren einer Lasereinrichtung und eine Vorrichtung zum additiven Fertigen. Bei der Vorrichtung zum additiven Fertigen kann es sich um eine entsprechende Vorrichtung für eines der vorstehend aufgezeigten Verfahren zum additiven Fertigen handeln. Eine solche Vorrichtung umfasst mehrere Bearbeitungsköpfe zum Aussenden von jeweils einem Laserstrahl.

Weiterhin ist erfindungsgemäß ein Verfahren zum Kalibrieren einer Lasereinrichtung vorgesehen, die ausgebildet ist, um einen Arbeitslaserstrahl in einem vorbestimmten Arbeitsbereich frei zu positionieren. Das Verfahren verwendet die vorstehend beschriebene Vorrichtung 1 zum Kalibrieren einer Lasereinrichtung.

Das Verfahren umfasst die folgenden Schritte:
Zunächst wird eine Sensorplatte 3 auf einem Arbeitsbereich, insbesondere einer Bauplattform 2 einer Vorrichtung zum additiven Fertigen angeordnet (S1). Die Sensorplatte wird mittels einer Zentriereinrichtung auf der Bauplattform zentriert ausgerichtet und angeordnet.

Im Anschluss daran wird eine Lochplattenlehre 4 auf der Sensorplatte 3 angeordnet, wobei die Lochplattenlehre 4 mehrere Kalibrierdurchgangsöffnungen 6 aufweist, die in einer vorbestimmten Anordnung zueinander angeordnet sind (S2).

Nun werden die Sensorfelder 5 belichtet. Die Belichtung erfolgt über die Kalibrierdurchgangsöffnungen 6 der Lochplattenlehre 4, um die relative Position der Sensorfelder 5 zueinander zu bestimmen (S3). Hierbei werden die vollständigen Kalibrierdurchgangsöffnungen 6 auf die jeweiligen Sensorfelder 5 abgebildet.

Daraufhin wird ein Pilotlaserstrahl auf Basis von Steuerinformationen mittels einer Lasereinrichtung durch die Kalibrierdurchgangsöffnungen 6 der Lochplattenlehre 4 auf den Sensorfeldern positioniert (S4). Auf diese Weise wird der Pilotlaserstrahl durch mehrere Kalibrierdurchgangsöffnungen 6 auf die Sensorfelder gerichtet. Die entsprechenden Steuerinformationen bilden dabei Soll-Werte aus.

Mittels der Sensorfelder 5 werden dann mehrere Ist-Werte von Ortsinformationen des Pilotlaserstrahls detektiert (S5).

Schließlich werden diese Ist-Werte mit entsprechenden Soll-Werten von Ortsinformationen für unterschiedliche Orte bzw. Positionen des Pilotlaserstrahls verglichen (S6).

Auf Basis dieser Werte können die jeweiligen Abweichungen der Soll-Werte von den Ist-Werten bestimmt werden (S7).

Zudem ist erfindungsgemäß ein Verfahren zum Ansteuern eines Laserstrahls, mit einem vorstehend aufgezeigten System, vorgesehen, wobei ein Arbeitslaserstrahl mit Steuerinformationen in einem Arbeitsbereich positioniert wird. Zum Bestimmen der Steuerinformationen werden die mittels des Verfahrens zum Kalibrieren einer Lasereinrichtung ermittelten Abweichungen als Korrekturwerte verwendet.

Dabei wird eine Korrekturfunktion anhand eines Vergleichs von Ist-Werten und Soll-Werten von Ortsinformationen eines Arbeitslaserstrahles erzeugt. Mittels der Korrekturfunktion können die ermittelten Werte über einen Arbeitsbereich interpoliert werden.

Anstelle einer Vorrichtung zum additiven Fertigen kann die erfindungsgemäße Vorrichtung bspw. auch zum Kalibrieren eines Laserstrahls für eine Laserschneidvorrichtung oder Ähnlichem vorgesehen sein.

Wichtige Elemente einer Laserschneidvorrichtung bzw. einer Laserstrahlschneidmaschine sind die Laserstrahlquelle, die Laserstrahlführung und der Bearbeitungskopf (Fokussieroptik) inkl. Schneiddüse. Der die Laserstrahlquelle verlassende Strahl kann im Nahinfrarot (Nd:YAG-Laser, Faserlaser, Scheibenlaser) über Lichtleitkabel, beim CO2-Laser über Umlenkspiegel zur Fokussieroptik an der Bearbeitungsstelle geführt werden. Die Fokussieroptik bündelt den Laserstrahl in einem Fokus und erzeugt so die zum Schneiden erforderliche Intensität.

Anlagen mit CO2-Lasern bestehen meist aus einer feststehenden Laserstrahlquelle und einer sogenannten fliegenden Optik. Ein Spiegelteleskop gewährleistet über den gesamten Bearbeitungsraum einen konstanten Rohstrahldurchmesser auf der Fokussierlinse. Dies ist notwendig, da der aus dem Laser austretende Strahl eine feste Divergenz besitzt. Unterschiedliche Lauflängen der Strahlung für unterschiedliche Bearbeitungspositionen würde ohne Kompensation durch das Spiegelteleskop den Rohstrahldurchmesser auf der Linse ändern. Unterschiedliche Blendenzahlen und Intensitäten wären die Folge.

Die Strahlführung zwischen optischem Resonator (Laserstrahlquelle) und Fokussieroptik wird durch gegebenenfalls wassergekühlte Spiegel realisiert. Die Spiegel sind gold- oder molybdänbeschichtet und bestehen aus monokristallinem Silizium oder reinem Kupfer. Laserstrahlung in einem Wellenlängenbereich von ca. 1 µm (Nd:YAG-Laser, Faserlaser, Scheibenlaser) kann dagegen auch über große Entfernungen mit Lichtleitkabel geführt werden.

Für eine richtungsunabhängige Schnittqualität werden bei linear polarisierten Laserstrahlen zwischen Resonator und Teleskop phasendrehende Spiegel angeordnet.

Der Strahl tritt fokussiert durch die sogenannte Schneiddüse, die meist aus Kupfer besteht und auch das Blas- bzw. Prozessgas auf die Bearbeitungsstelle lenkt.

### Bezugszeichenliste

- 1: Vorrichtung
- 2: Bauplattform
- 3: Sensorplatte
- 4: Lochplattenlehre
- 5: Sensorfeld
- 6: Kalibrierdurchgangsöffnung
- 7: Rohrblende

## Patentansprüche

1. Vorrichtung (1) zum Kalibrieren einer Lasereinrichtung, die ausgebildet ist, um einen Arbeitslaserstrahl in einem vorbestimmten Arbeitsbereich frei zu positionieren, umfassend
eine Sensorplatte (3) mit mehreren Sensorfeldern (5) zum Anordnen in einem Arbeitsbereich,
eine Lochplattenlehre (4) mit mehreren Kalibrierdurchgangsöffnungen (6), wobei die mehreren Kalibrierdurchgangsöffnung (6) jeweils im Bereich jeweils einer der Sensorfelder (5) angeordnet sind, wobei die Flächen der Kalibierdurchgangsöffnungen (6) kleiner als die jeweilige Fläche eines entsprechenden Sensorfeldes (5) der Sensorplatte (3) sind,
eine Steuereinrichtung zum Bestimmen der relativen Position der Sensorfelder (5) zueinander nach dem Belichten derselben durch die Kalibrierdurchgangsöffnungen (6) der Lochplattenlehre (4),
eine Pilot-Lasereinrichtung zum Bereitstellen eines Pilotlaserstrahls entlang des Strahlenganges des Arbeitslaserstrahls, um eine Lasereinrichtung durch Abtasten des Pilotlaserstrahls mittels der Sensorfelder zu kalibrieren.

2. Vorrichtung (1) gemäß Anspruch 1,
**dadurch gekennzeichnet,**
**dass** alle Sensorfelder (5) von der Lochplattenlehre (4) abgedeckt sind, sodass im Bereich jedes Sensorfeldes (5) eine Kalibrierdurchgangsöffnung (6) angeordnet ist.

3. Vorrichtung (1) gemäß Anspruch 1 oder 2,
**dadurch gekennzeichnet,**
**dass** die Sensorfelder (5) in einem Randbereich der Sensorplatte (3) angeordnet sind.

4. Vorrichtung (1) gemäß einem der Ansprüche 1 bis 3,
**dadurch gekennzeichnet,**
**dass** eine Lasereinrichtung zum Bereitstellen eines Arbeitslaserstrahls ausgebildet ist.

5. Vorrichtung (1) gemäß Anspruch 4,
**dadurch gekennzeichnet,**
**dass** die Pilot-Lasereinrichtung Bestandteil der Lasereinrichtung ist oder als separate Pilot-Lasereinrichtung ausgebildet ist.

6. Vorrichtung (1) gemäß einem der Ansprüche 1 bis 5,
**dadurch gekennzeichnet,**
**dass** die Sensorplatte (3) eine Leiterplatte und CMOS-Sensoren und/oder CCD-Sensoren sowie vorzugsweise eine elektronische Netzwerkverbindung umfasst.

7. Vorrichtung (1) gemäß einem der Ansprüche 1 bis 6,
**dadurch gekennzeichnet,**
**dass** die die Kalibierdurchgangsöffnungen (6) begrenzenden Kanten der Lochplattenlehre (4) derart scharfkantig und/oder konisch ausgebildet sind, sodass die Lochplatte zumindest im Bereich der Kalibierdurchgangsöffnungen (6) derart dünn ausgebildet ist, dass parallaxe Fehler vermeidbar sind.

8. Vorrichtung (1) gemäß einem der Ansprüche 1 bis 7,
**dadurch gekennzeichnet,**
**dass** die Kalibierdurchgangsöffnungen (6) in einem Raster mit Abständen zwischen 50 mm und 500 mm angeordnet sind.

9. Vorrichtung (1) gemäß einem der Ansprüche 1 bis 8,
**dadurch gekennzeichnet,**
**dass** die Sensorplatte (3) und/oder die Lochplattenlehre (4) eine Zentriereinrichtung zum zentrierten Anordnen in einem Arbeitsbereich aufweisen.

10. Vorrichtung (1) gemäß einem der Ansprüche 1 bis 9,
**dadurch gekennzeichnet,**
**dass** auf den Kalibrierdurchgangsöffnungen (6) jeweils eine in Richtung Lasereinrichtung weisende Rohrblende (7) angeordnet ist, um im Bereich der Sensorfelder (5) gleichmäßiges diffuses Licht zu erzeugen.

11. System zum Kalibrieren einer Lasereinrichtung umfassend
eine Vorrichtung (1) zum Kalibrieren einer Lasereinrichtung gemäß einem der Ansprüche 1 bis 10, und
eine Vorrichtung (1) zum additiven Fertigen, wobei die Vorrichtung (1) zum additiven Fertigen mehrere Bearbeitungsköpfe zum Aussenden jeweils eines Laserstrahls umfasst.

12. Verfahren zum Kalibrieren einer Lasereinrichtung, die ausgebildet ist, um einen Arbeitslaserstrahl in einem vorbestimmten Arbeitsbereich frei zu positionieren, mit einer Vorrichtung (1) gemäß einem der Ansprüche 1 bis 10, umfassend die folgenden Schritte
Anordnen einer Sensorplatte (3) auf dem Arbeitsbereich, wobei die Sensorplatte mehrere Sensorfelder (5) aufweist,
Anordnen einer Lochplattenlehre (4) auf der Sensorplatte (3), wobei die Lochplattenlehre (4) mehrere Kalibrierdurchgangsöffnungen (6) aufweist, die in einer vorbestimmten Anordnung zueinander und jeweils im Bereich eines Sensorfeldes angeordnet sind,
Belichten von Sensorfeldern (5) der Sensorplatte (3) über die Kalibrierdurchgangsöffnungen (6) der Lochplattenlehre (4), um die relative Position der Sensorfelder (5) zueinander zu bestimmen,
Positionieren eines Pilotlaserstrahls auf Basis von Steuerinformationen mittels einer Lasereinrichtung auf die Sensorfelder (5), sodass der Pilotlaserstrahl auf mehrere Sensorfelder (5) gerichtet wird, wobei die Steuerinformationen zum Positionieren des Pilotlaserstrahls Soll-Werte bilden,
Detektieren von mehreren Ist-Werten von Ortsinformationen des Pilotlaserstrahls mittels der Sensorfelder (5),
Vergleichen dieser Ist-Werte mit entsprechenden Soll-Werten von Ortsinformationen für unterschiedliche Orte des Pilotlaserstrahls, und
Bestimmen der jeweiligen Abweichungen.

13. Verfahren nach Anspruch 12,
**dadurch gekennzeichnet,**
**dass** zum Bestimmen der Steuerinformationen zum Positionieren eines Arbeitslaserstrahls die ermittelten Abweichungen als Korrekturwerte verwendet werden.

14. Verfahren nach Anspruch 13.
**dadurch gekennzeichnet,**
**dass** eine Korrekturfunktion anhand eines Vergleichs von Ist-Werten und Soll-Werten von Ortsinformationen eines Arbeitslaserstrahls erzeugt wird, um die ermittelten Werte über einen Arbeitsbereich zu interpolieren.

15. Verfahren nach einem der Ansprüche 12 bis 14,
**dadurch gekennzeichnet,**
**dass** das Verfahren für mehrere Laserstrahlen von Bearbeitungsköpfen einer Multi-Lasereinrichtung ausgebildet ist, wobei folgende weiterer Schritte ausgeführt werden,
Bestimmen der jeweiligen Abweichung, für die einzelnen Laserstrahlen der Bearbeitungsköpfe, und Kalibrieren der mehreren Laserstrahlen der Bearbeitungsköpfe der Multi-Lasereinrichtung relativ zueinander im Bearbeitungsbereich.

## Claims

1. A device (1) for calibrating a laser device which is designed to freely position a working laser beam in a predetermined working range, comprising
a sensor plate (3) with several sensor fields (5) for arrangement in a working area,
a perforated plate gauge (4) with a plurality of calibration openings (6), wherein the plurality of calibration openings (6) are each arranged in the region of one of the sensor fields (5), the surface of the calibration openings (6) being smaller than the respective surface of a corresponding sensor field (5) of the sensor plate (3),
a control device for determining the relative position of the sensor fields (5) to each other after exposing them through the calibration openings (6) of the perforated plate gauge (4),
a pilot laser device for providing a pilot laser beam along the path of the working laser beam in order to calibrate a laser device by scanning the pilot laser beam by means of the sensor fields.

2. The device (1) according to claim 1,
**characterized in that**
all sensor fields (5) are covered by the perforated plate gauge (4), so that a calibration opening (6) is arranged in the area of each sensor field (5).

3. The device (1) according to claim 1 or 2,
**characterized in that**
the sensor fields (5) are arranged in an edge region of the sensor plate (3).

4. The device (1) according to any one of the claims 1 to 3,
**characterized in that**
a laser device is designed to provide a working laser beam.

5. The device (1) according to claim 4,
**characterized in that**
the pilot laser device is part of the laser device or is designed as a separate pilot laser device.

6. The device (1) according to any one of the claims 1 to 5,
**characterized in that**
the sensor plate (3) comprises a printed circuit board and CMOS sensors and/or CCD sensors and preferably an electronic network connection.

7. The device (1) according to any one of the claims 1 to 6,
**characterized in that**
the edges of the perforated plate gauge (4) bounding the calibration openings (6) are sharpedged and/or conical in such a way that the perforated plate is so thin, at least in the region of the calibrating openings (6), that parallax errors can be avoided.

8. The device (1) according to any one of the claims 1 to 7,
**characterized in that**,
the calibrating openings (6) are arranged in a grid with spacings of between 50 mm and 500 mm.

9. The device (1) according to any one of the claims 1 to 8,
**characterized in that**,
the sensor plate (3) and/or the perforated plate gauge (4) have a centering device for centered arrangement in a working area.

10. The device (1) according to any one of the claims 1 to 9,
**characterized in that**,
a tubular diaphragm (7) pointing in the direction of the laser device is arranged on each of the calibration openings (6) in order to generate uniform diffuse light in the area of the sensor fields.

11. A system for calibrating a laser device comprising
a device (1) for calibrating a laser device according to any one of the claims 1 to 10, and a device (1) for additive manufacturing, wherein the device (1) for additive manufacturing comprises a plurality of processing heads for emitting a respective laser beam.

12. A method for calibrating a laser device adapted to freely position a working laser beam in a predetermined working area with a device (1) according to any one of the claims 1 to 10, comprising the following steps:
arrangement of a sensor plate (3) on the working area, wherein the sensor plate is having a plurality of sensor fields (5),
arrangement of a perforated plate gauge (4) on the sensor plate (3), the perforated plate gauge (4) having a plurality of calibration openings (6), which are arranged in a predetermined arrangement relative to one another and in each case in the region of a sensor field,
exposure of sensor fields (5) of the sensor plate (3) via the calibration openings (6) of the perforated plate gauge (4) in order to determine the relative position of the sensor fields (5) to one another,
positioning of a pilot laser beam on the basis of control information by means of a laser device onto the sensor fields (5), so that the pilot laser beam is directed onto a plurality of sensor fields (5), wherein the control information for positioning the pilot laser beam forms target values,
detection of several actual values of location information of the pilot laser beam by means of the sensor fields (5),
comparison of these actual values with corresponding target values of location information for different locations of the pilot laser beam, and determine the respective deviations.

13. The method according to claim 12,
**characterized in that**,
the deviations determined are used as correction values to determine the control information for positioning a working laser beam.

14. The method according to claim 13,
**characterized in that**,
a correction function is generated on the basis of a comparison of actual values and target values of location information of a working laser beam in order to interpolate the determined values over a working range.

15. The method according to any one of the claims 12 to 14,
**characterized in that**,
the method is designed for a plurality of laser beams from processing heads of a multi-laser device, the following further steps being carried out,
determining the respective deviation for the individual laser beams of the processing heads, and
calibrating the multiple laser beams of the processing heads of the multi-laser device relative to each other in the processing area.

## Revendications

1. Dispositif (1) pour calibrer un dispositif laser, qui est réalisé pour positionner librement un faisceau laser de travail dans une zone de travail prédéterminée, comprenant
une plaque de capteurs (3) comportant plusieurs champs de capteurs (5) destinée à être disposée dans une zone de travail,
un gabarit de plaque perforée (4) comportant plusieurs ouvertures de passage de calibrage (6), dans lequel les plusieurs ouvertures de passage de calibrage (6) sont disposées chacune dans la zone d'un des champs de capteurs (5), dans lequel les surfaces des ouvertures de passage de calibrage (6) sont plus petites que la surface respective d'un champ de capteurs (5) correspondant de la plaque de capteurs (3),
un dispositif de commande pour déterminer la position relative des champs de capteurs (5) les uns par rapport aux autres après
l'exposition de ceux-ci à travers les ouvertures de passage de calibrage (6) du gabarit de plaque perforée (4), un dispositif laser pilote pour fournir un faisceau laser pilote le long du trajet de faisceau du faisceau laser de travail, afin de calibrer un dispositif laser en balayant le faisceau pilote au moyen des champs de capteurs.

2. Dispositif (1) selon la revendication 1,
**caractérisé en ce**
**que** tous les champs de capteurs (5) sont recouverts par le gabarit de plaque perforée (4), de sorte qu'une ouverture de passage de calibrage (6) est disposée dans la zone de chaque champ de capteurs (5).

3. Dispositif (1) selon la revendication 1 ou 2,
**caractérisé en ce**
**que** les champs de capteurs (5) sont disposés dans une zone périphérique de la plaque de capteurs (3).

4. Dispositif (1) selon l'une quelconque des revendications 1 à 3,
**caractérisé en ce**
**qu'**un dispositif laser est conçu pour fournir un faisceau laser de travail.

5. Dispositif (1) selon la revendication 4,
**caractérisé en ce**
**que** le dispositif laser pilote fait partie du dispositif laser ou est conçu comme un dispositif laser pilote séparé.

6. Dispositif (1) selon l'une quelconque des revendications 1 à 5,
**caractérisé en ce**
**que** la plaque de capteurs (3) comprend une carte de circuit imprimé et des capteurs CMOS et/ou des capteurs CCD et, de préférence, une connexion réseau électronique.

7. Dispositif (1) selon l'une quelconque des revendications 1 à 6,
**caractérisé en ce**
**que** les arêtes délimitant les ouvertures de passage de calibrage (6) du gabarit de plaque perforée (4) sont conçues de façon tranchante et/ou conique, de sorte que la plaque perforée soit, au moins dans la zone des ouvertures de passage de calibrage (6), suffisamment mince pour éviter les erreurs de parallaxe.

8. Dispositif (1) selon l'une quelconque des revendications 1 à 7,
**caractérisé en ce**
**que** les ouvertures de passage de calibrage (6) sont disposées sur un réseau présentant des espacements compris entre 50 mm et 500 mm.

9. Dispositif (1) selon l'une quelconque des revendications 1 à 8,
**caractérisé en ce**
**que** la plaque de capteurs (3) et/ou le gabarit de plaque perforée (4) présentent un dispositif de centrage pour une disposition centrée dans une zone de travail.

10. Dispositif (1) selon l'une quelconque des revendications 1 à 9,
**caractérisé en ce**
**que** sur les ouvertures de passage de calibrage (6) est disposé respectivement un diaphragme tubulaire (7) orienté en direction du dispositif
laser, afin de produire, dans la zone des champs de capteurs (5), une lumière diffuse uniforme.

11. Système pour calibrer un dispositif laser comportant
un dispositif (1) pour calibrer un dispositif laser selon l'une quelconque des revendications 1 à 10, et
un dispositif (1) de fabrication additive, dans lequel le dispositif (1) de fabrication additive comprend plusieurs
têtes d'usinage destinées à émettre chacune un faisceau laser.

12. Procédé de calibrage d'un dispositif laser, qui est conçu pour positionner librement un faisceau laser de travail dans une zone de travail prédéterminée, comportant un dispositif (1)
selon l'une quelconque des revendications 1 à 10, comprenant les étapes suivantes
la disposition d'une plaque de capteurs (3) sur la zone de travail, dans lequel la plaque de capteurs présente plusieurs champs de capteurs (5),
la disposition d'un gabarit de plaque perforée (4) sur la plaque de capteurs (3), dans lequel le gabarit de plaque perforée (4) présente plusieurs ouvertures de passage de calibrage (6) qui sont disposées dans une configuration prédéterminée les unes par rapport aux autres et respectivement dans la zone d'un champ de capteurs,
l'exposition des champs de capteurs (5) de la plaque de capteurs (3) à travers les ouvertures de passage de calibrage (6) du gabarit de plaque perforée (4), afin de déterminer la position relative des champs de capteurs (5) les uns par rapport aux autres,
le positionnement d'un faisceau laser pilote sur la base d'informations de commande au moyen d'un dispositif laser sur les champs de capteurs (5), de sorte que le faisceau laser pilote est dirigé vers plusieurs champs de capteurs (5), dans lequel les informations de commande constituent les valeurs cibles pour le positionnement du faisceau laser pilote,
la détection de plusieurs valeurs réelles des informations d'emplacement du faisceau laser pilote au moyen des champs de capteurs (5),
la comparaison de ces valeurs réelles avec les valeurs cibles correspondantes d'informations d'emplacement pour différents emplacements du faisceau laser pilote, et
la détermination des écarts respectifs.

13. Procédé selon la revendication 12,
**caractérisé en ce**
**que**, pour déterminer les informations de commande destinées au positionnement d'un faisceau laser de travail, les écarts déterminés sont utilisés comme valeurs de correction.

14. Procédé selon la revendication 13,
**caractérisé en ce**
**qu'**une fonction de correction est générée sur la base d'une comparaison des valeurs réelles et des valeurs cibles des informations d'emplacement d'un faisceau laser de travail, afin d'interpoler les valeurs déterminées sur une zone de travail.

15. Procédé selon l'une quelconque des revendications 12 à 14,
**caractérisé en ce**
**que** le procédé est conçu pour plusieurs faisceaux laser provenant de têtes d'usinage d'un dispositif multi-laser, dans lequel les étapes supplémentaires suivantes sont exécutées,
la détermination de l'écart respectif pour les faisceaux laser individuels des têtes d'usinage, et le calibrage des multiples dispositif multi-laser les uns par rapport aux autres dans la zone d'usinage.
